# EUROPEAN PATENT APPLICATION

(11) **EP 1 617 341 A1**
(43) Date of publication of application: **18.01.2006**
(21) Application number: 04405456.7
(22) Date of filing: 16.07.2004
(51) Int. Cl.: G06F 17/30

(54) **File operation management device**

(71) Applicant: International Business Machines Corporation, Armonk, NY 10504 (US)
(72) Inventor: Doering, Andreas, 8134 Adliswil (CH)
(74) Representative: Klett, Peter Michael

(57) **Abstract**

The present invention relates to a file operation management device for performing file system operations, comprising a storage interface for coupling to a data storage device, a system-internal data interface for connecting with a processing unit to receive user and/or command data from the processing unit and to transmit status and user data to the coupled processing unit, a file system unit for receiving the user and/or command data via the data interface and for performing the file system operation on the data storage device depending on the user and/or command data received via the data interface.

## Description

### Field of the invention

The present invention is related to a file operation management device for performing file system operations.

### Background of the invention

File systems are currently mainly software-implemented and are usually an integrated part of an operating system. A software program which intends to access a file for reading or writing data therefore invokes a subsidiary software routine which is executed on the same processor as the application program.

Because the processor is typically optimized for user applications running as software on the processor, the resources of the processor are not optimally used when executing file system operations. For instance, a floating point unit or extensions for multimedia processing are included in the processor which are not used for file system operations. On the other hand, functions like encryption or decryption or checksum calculation are not very well supported by processors designed predominantly for application processing.

Furthermore, interactions with hardware such as a hard disk drive are time-consuming in an operating system which provides security mechanisms, hardware abstraction and other features.

In EP 1074 916 a system and method for managing data stored in a cache block in a cache memory is described. The cache block is located at a cache block address in the cache memory, and the data in the cache block corresponds to a storage location in a storage array identified by a storage location identifier. A storage processor accesses the cache block in the cache memory and provides a cache management command to a command processor. A processor memory coupled to the storage processor stores a search key based on the storage location identifier corresponding to the cache block. A command processor coupled to the storage processor receives a cache management command specified by the storage processor and transfers the storage location identifier from the processor memory. A cache management memory stores a cache management structure including the cache block address and the search key. A cache management processor is coupled to the cache management memory by a second link to manipulate the cache management structure in a hash table with linked lists at each hash queue element within the cache management memory in accordance with the cache management command and the search key.

In US 2002/0065924 an apparatus and method for hardware implementation or acceleration of operating system functions is described. The apparatus in one embodiment handles service requests over a network, wherein the network utilizes a protocol. In this aspect, the apparatus includes: a network subsystem for receiving and transmitting network service requests using the network protocol; and a service subsystem, coupled to the network subsystem, for satisfying the network service requests. Also in this aspect, at least one of the network subsystem and the service subsystem is hardware-implemented; the other of the network subsystem and the service subsystem may optionally be hardware-accelerated. A variety of related embodiments are also provided, including file servers and web servers.

### Summary of the invention

The file operation management device according to claim 1 and the processing system according to claim 11 allow to better utilize the application-processing unit and provides a file system operation functionality which requires less resources of the application-processing unit and provides a performance increase of the application.

According to a first aspect of the present invention, a file operation management device is provided to perform file system operations. The file operation management device includes a storage interface for coupling to a storage device. Furthermore, a data interface for coupling to a processing unit in which application programs are processed, also referred to as application-processing unit, is included to receive user and/or command data from the application-processing unit and to transmit status and user data to the coupled application-processing unit. The file operation management device further includes a file system unit for receiving the user and/or command data via the data interface and for performing a file system operation indicated by the command data on the data storage device depending on the user and/or command data received.

The coupling of the file operation management device to the application-processing unit provides the file system operations that are invoked by the processed application to be outsourced to the file operation management device instead of being processed in the application-processing unit. This has the advantage that the application-processing unit no longer needs to perform the file system operations provided by software routines which are normally included in the operating system running on the application-processing unit. Furthermore, software routines for file operations are normally stored in the main memory coupled to the application-processing unit such that by outsourcing them memory space can be saved.

According to an embodiment of the present invention, the file operation management device receives command data to perform the file system operations as create, open, read, write of files. Optionally, the file operation management device can improve the redundancy of performance including checksum checking and generation (RAID functionality), background copy for back-up and data migration services and monitoring for performance tuning, billing and service.

A memory unit can further be provided in order to store status information of the file system. Particularly, the memory unit can comprise a non-volatile memory. Furthermore, a cache memory unit can be included to cache user data.

According to another embodiment of the present invention, a token/lock management unit is included to maintain the integrity of files stored in the coupled storage device by synchronizing accesses to the files. Thereby, concurrent uncoordinated access to a file can be avoided.

Furthermore, the file system unit may provide a fail-over functionality wherein in the event of a failure in the file system unit, the performing of the file system operations is handed over to a software-implemented file operating system processed in the application-processing unit.

According to another embodiment of the present invention, a file operation management device is provided wherein the file system unit includes a fail-over functionality via a fail-over interface, wherein in the event of a failure in the file system unit the performing of the file system operations is handed over to a file operation-handling instance by means of the fail-over interface. The file operation-handling instance can be of any type able to perform file operations.

Preferably, the fail-over interface of the file operation management device is designed to hand over file operations to the application-processing unit as the file operation-handling instance which is implemented as a software implemented file system unit of the application-processing unit. Optionally the fail-over interface is designed to hand over file operations to another file system unit which is coupled to the application-processing unit to receive the user and/or command data via the data interface and to perform the file system operation on the data storage device depending on the user and/or command data received via the data interface.

In order to better utilize the resources of the file operation management device, the file system unit can share the performing of the file system operation with another file system unit coupled to the fail-over interface.

Furthermore, the file operation management device can provide that the file system unit is designed to take over performing of the file system operation of another coupled file system unit when an indication about a failure of the coupled other file system unit is received via the fail-over interface.

The file operation management device may further comprise an adapter unit for controlling the storage device which can be one of SCSI, S-ATA, FibreChannel.

According to another aspect of the present invention, a processing system including a file operation management device is provided. Therein, the file operation management device is connected to one or more application-processing units. Preferably, the one or more application-processing units are coupled to the file operation management device via at least one of a processor bus, a PCI bus, a PCI-X bus, a PCI-Express bus, an SCSI bus, a Microchannel bus, a Frontside bus (FSB), a Hypertransport bus, a S-ATA bus, a Rapid-I/O bus and a Fire Wirebus.

### Brief description of the drawings

Preferred embodiments of the present invention will now be described in detail with reference to the accompanying drawings, in which:
figure 1 shows a block diagram of a file operation management device,
figure 2 shows a block diagram of a multiple-processor system comprising several file operation management devices.

### Description of the preferred embodiments

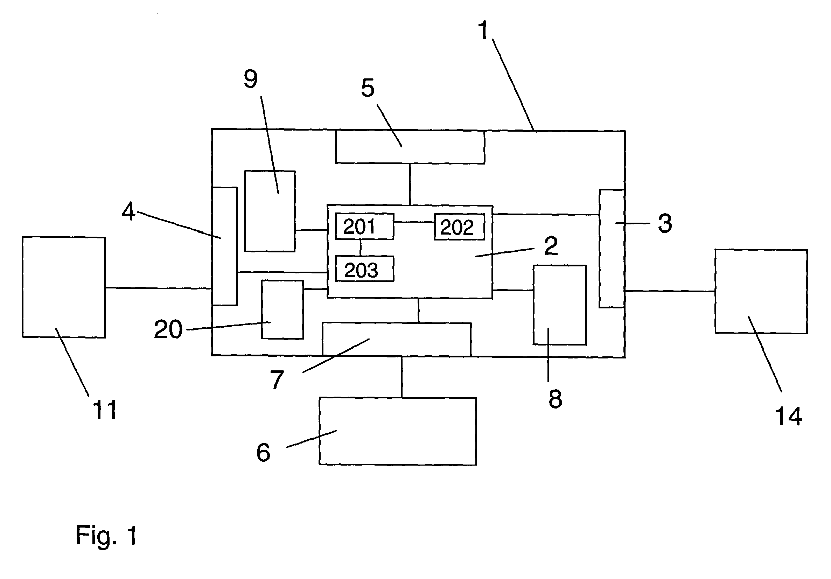

In figure 1 a block diagram of a file operation management device 1 is depicted. The file operation management device 1 can be integrated into a single chip or as a circuit block in a processor device. The file operation management device 1 includes a file system unit 2 for providing file access functions to perform those file operations usually covered by the respective portion of an operating system. Possible file operations are creating, opening, reading, writing files, including maintaining directories, storing on disk etc. The file system unit 2 can furthermore support one or more of the functions including checksum checking, checksum generation (RAID functionality), creation of back-up copies, data migration, and monitoring for performance tuning, system maintenance, or billing for file accesses. Preferably, the file operation management device 1 implements those file operating functions that are normally performed in an operating system as included in the file systems FAT32, NTFS, HPFS, ext2, ext3, ReiserFS, JFS, Solaris FS, AIX File System, XFS etc.

For communicating with an application-processing unit 14 which performs software applications, the file operation management device 1 comprises a data interface 3 that is coupled to the application-processing unit 14 so that file operations can be invoked by the application-processing unit 14 by accessing the file operation management device 1. The file system unit 2 via the data interface 3 is prepared to receive user and/or command data from the application-processing unit 14 and to send status data and user data to the coupled application-processing unit 14. For accessing a storage device 11 a storage interface 4 is provided to allow the file system unit 2 to transmit to and receive data from the coupled storage device 11. The interfaces 3, 4 can also be integrated into one single interface.

The connection from the file operation management device 1 to the application-processing unit 14 via the data interface 3 is characterized by low latency, low-level supplied reliability and identifiability of the originating application process on the CPU 12. The connection is system-internal, i.e. the connection is arranged within the same system as the application-processing unit 14 and the operation management device 1, thereby not offering access to devices that could interfere with intended system operation nor observing the data transferred over this connection. Protection is ensured thereby without need for e.g. cryptographic security mechanisms. Devices that have not been identified to the system as trustable are untrusted devices, and hence may have no such access. This means that for instance no authentication methods like cryptographic signatures, timeout detection for the connection, or handling of overload situations need be included in every command transfer or status retrieval. The inherent security of the closed system hence allows to do without such additional security mechanisms, thereby reducing the latency of data transfer. This also allows to do without local caches within the application-processing unit 14, since the connection is fast enough to make use of the data via the operation management device 1.

Examples for this connection are the front-side-bus of a processor, hypertransport, Elastic Interface, RapidIO. These connection standards are based on addresses which allow the protected mapping of command and status address regions into the virtual address space of each application running on the application-processing unit 14. In the data interface 3 and in the application-processing unit 14, an intrinsic transaction-management mechanism is usable to automatically detect failures of the connection between the file operation management device 1 and the application-processing unit 14 or failures of the file operation management device 1. Such a failure can be handled by an exception handler in the application-processing unit 14 which will map a different file operation management device 1 into the same address space for continued reliable operation. Therefore, error handling is transparent to the application, i.e. it need not take care of error handling. The data interface 3 is hence a system-internal interface in contrast to a web interface of a file server.

The file operation management device 1 comprises a file system processor 201 that retrieves functionalities from a hardware-accelerated file-system-specific function unit 202 or a file system code 203 implemented as firmware. The hardware-accelerated file-system-specific function unit 202 and the file system code 203 are described in more detail below.

The hardware-accelerated file-system-specific function unit 202 is preferably in charge of functions that are easier implementable in hardware, those which require functionalities that are not typically provided by a general-purpose processor, such as long-integer-arithmetics, and/or those that have little data locality, e.g. in DMA, making no or negligible use of a local cache. In other words, the hardware-accelerated file-system-specific function unit 202 is handling those functions that are executed as part of most file system functions, i.e. with substantially every file access. Those functions comprise here one or more of
- handling data movement between
   - several of the memory units 6
   - a memory unit 6 and the main memory 13
   - a memory unit 6 and the interfaces 4 or 5
- encryption and decryption,
- directory searches,
- checksum checking,
- fragmentation or defragmentation,
- access right checking.
The frequency of those functions is hence larger than of those functions handled by the file system code 203.

The file system code 203 comprises three code fractions, namely framework software, file system software, and service software. It generally provides for the flexibility of the file system, e.g. in the event that additional filetypes should be handled, or to allow to accommodate changes in the communication protocol standard. It becomes clear that the functionality of the file system code is less frequently required for the file system functionality and/or more complex to realize in hardware than in software.

The framework software is intended to provide abstractions of hardware details, managing independent processes such as parallel file accesses, authentication and protection management, error handling, installation or deinstallation of service software.

The file system software configures the hardware-accelerated file-system-specific function unit 202 to fit to the various data structures of different file systems. A data structure comprises inter alia the way file directories are stored on a disk. Furthermore it handles those cases that are beyond the capability of the hardware-accelerated file-system-specific function unit 202. This could for instance be an extension of features in a file system that have not been implemented in the hardware-accelerated file-system-specific function unit 202 at its construction time.

The service software is not essential for the file system operations but it makes advantageous use of the fact that all file system operations are handled by the file operation management device 1. The functionalities of the service software can include creation of back-up copies, data migration, data erasing, and monitoring for performance tuning, system maintenance, or billing for file accesses. This service software can be designed by the manufacturer of the 1 to ensure secure and flawless operation.

Monitoring is a functionality to assess system performance, intensity of system use, system integrity, frequency of data accesses, storage device utilization, and similar system parameters. This monitoring can be performed per application, per user or per user group, such as a company or the like. The results of the monitoring can be made accessible to a system maintainer via the data interface 3, allowing to adapt an application to the reported system status. Such adaptation can be utilized to tune the system performance. System maintenance can comprise restructuring the number and type of storage devices connected.

The monitoring result also provides a basis for billing a user of the application-processing unit 14. The file system unit 2 provides an advantageous entity for accounting the file-system-related activities independent of operating systems and user partitions. For example a user in a data center can sign up to an outsourcing service arrangement with a service provider who operates the system 19 and bills the user individually for use of the application-processor unit 19, based for instance on the utilized network bandwidth, storage capacity occupied, or storage access frequency. Another example could be a gaming application in an online environment, wherein a multitude of users are provided by the service provider who operates the system 19, with the opportunity to save game parameters in the system 19. The service provider then charges the users per duration of storage time, and access frequency. The measured parameter that is used as the basis for billing is being monitored on a per-user basis.

The file operation management device 1 can be designed with one or more of the file system processors 201 and/or one or more memory units 6, wherein the file operation management device 1 can take advantage of different types of memory regions within the same physical memory unit 6, for instance memory regions with error correction, memory regions with error detection, or memory regions without any means for error handling. Also, different memory types such as memories having a high bandwidth and high latency, blockwise accessible memory, etc. can be used.

The file operation management device 1 also comprises a fail-over interface 5, a cache memory unit 9, a memory interface 7 to a memory unit 6, and a token/lock management unit 8. The interfaces 7, 5 present in the file operation management device 1 provide advanced features. Thus, the fail-over interface 5 is usable to couple the file operation management device 1 to other file operation management devices for synchronization and for communication of fail-over states as discussed in more detail below.

The file operation management device 1 also comprises an access scheduling unit 20 connected to the file system unit 2, described in more detail below.

The application-processing unit 14 addresses the file operation management device 1 preferably like a permanent memory by transmitting commands such as for reading or writing of data wherein the file operation management device 1 handles the further operations related to addressing the connected storage device 11 in the appropriate manner by itself. The file operation management device 1 communicates via its storage interface 4 by means of an appropriate communication protocol with the storage device 11.

By providing the file operation management device 1 that comprises a file system unit 2 that is separate from the application-processing unit 14, file operations are processed separately from the application-processing unit 14, thereby saving resources of the application-processing unit 14 by outsourcing them.

For example, the file operation management device 1 can be included into a chipset for an AMD Opteron or an AMD Athlon CPU unit. Thereby, the file operation management device 1 can be integrated into personal computers and workstations. The integration can be carried out by connecting the file operation management device 1 to the chipset via an appropriate interface such as hypertransport, PCI-X, PCI-Express or CSA (Communications Streaming Architecture). Optionally, the file operation management device 1 can be integrated in the CPU itself or in interface devices coupled to the CPU, for instance, the AMD-811 I/O Hub.

For coupling the file operation management device 1 according to the present invention with servers and PCs, the file operation management device 1 can be integrated together with an adapter for the data storage device 11 such as SCSI, S-ATA (Serial ATA), FibreChannel etc. on one board to be integrated into a variety of products, from servers and other dedicated storage-related products to PCs and workstations.

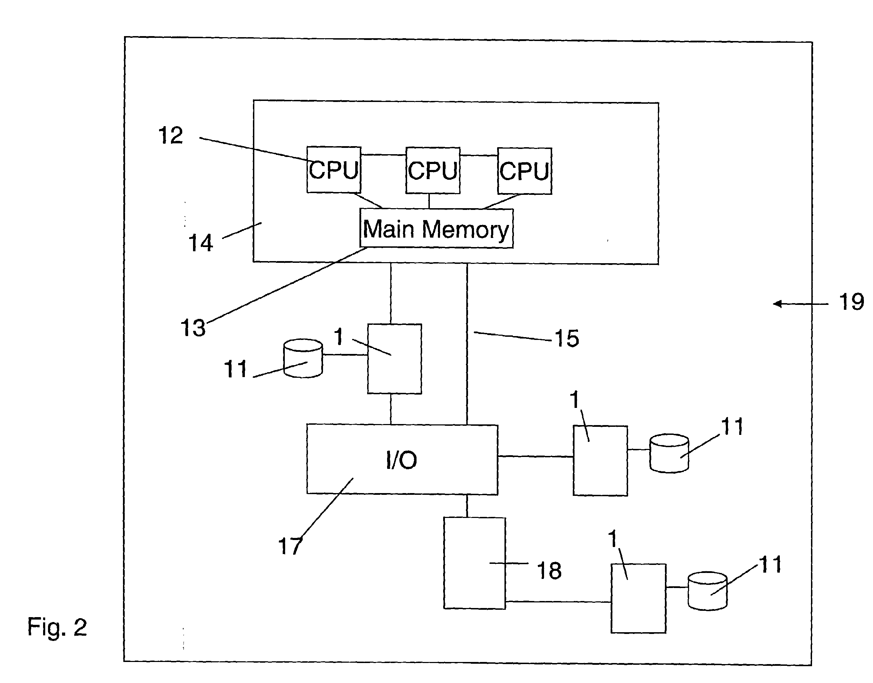

In figure 2, a block diagram of a system 19, e.g. a server or workstation, including a number of interconnected CPUs 12 and connected thereto a memory unit 13 serving as a main memory for performing applications on the CPUs 12 is shown. The CPUs 12 and the main memory unit 13 are included in an application-processing unit 14 of the workstation. The application-processing unit 14 is coupled via a network 15, such as a bus or a crossbar network, to an I/O network 17 for networking, storage, graphics, etc. The I/O Network 17 comprises I/O adapters such as network cards or storage adapters. The file operation management device 1 described above is here arranged three times at different positions. A first file operation management device 1 is coupled to a respective interface of the application-processing unit 14. A second file operation management device 1 is coupled to the I/O network 17. A third file operation management device 1 is coupled to an adapter card 18 coupled to the I/O network 17. Each of the file operation management devices 1 is coupled to a respective storage device 11 that can preferably be a mechanical data storage device such as a disk drive or a CD ROM drive or the like. Optionally, a memory hub between the CPUs 12 and the main memory 13 can be provided while the CPUs 12 are connected to a common front side bus.

It is preferred to operate the various file operation management devices 1 in parallel in order to achieve a higher performance. The fact that there is more than one active file operation management device 1 for the application-processing unit 14 provides an advantageous take-over option in case of a failure of one of the file operation management devices 1. In the event that one of the file operation management devices 1 fails, one of the other file operation management devices 1 can take over its functionality. Furthermore, the file operation management devices 1 can be coupled to share the file operations, thereby providing a faster access to the files.

The file system unit 2 of the file operation management devices 1 has a fail-over functionality so that a transfer of the file system operation functionality from e.g. the first file operation management device 1 to e.g. the second file operation management device 1 in the event of a failure in the file system unit 2 of the first file operation management device 1, is carried out. The file system operation functionality is then provided by the second file operation management device 1 implemented in the same server or workstation 19.

Also, if any of the file operation management devices 1 fails, its functionality can be taken over by one or more of the CPUs 12 wherein in that case an operation system is loaded into the main memory 13 to provide the file system operation functionality as it is done by conventional operating-system software. This can be particularly useful in an embodiment of the system 19 where only one file operation management device 1 is available or if the remaining file operation management device 1 does not have the capacity to handle all file operations.

Thirdly, the file system operation functionality may be provided by a remote server if the file operation management device 1 fails. This is particularly attractive if the storage device 11 is provided by means of a shared access, e.g. to a Storage Area Network. The fail-over interface 5 of any of the file operation management devices 1 is designed to continuously transfer data on the operations of its file system unit 2 to the fail-over interface of one or more of the other file operation management devices 1 to allow the completion of those operations that were outstanding in the failing file operation management device 1 at the time at which the failure occurred. The same applies to all other file operation management devices 1. The respective data can be compressed and communicated in any standardized format.

The file system unit 2 of the each file operation management device 1 may include a mechanism to detect whether a failure in a connected other file operation management device 1 has occurred so that it can be determined when a task of a failed file operation management device 1 should be transferred to one of the working file operation management devices 1. For signaling of the failure, a respective failure signal is transmitted via the fail-over interface 5. A variety of different task management and failure mechanisms that are known in the art can be used.

If more than one file operation management device 1 is used in the system 19, these can be connected to one or more storage devices 11.

As depicted in figure 1, the memory interface 7 to the memory unit 6 can be used for storing critical information therein with respect to the file system. This memory unit 6, preferably being a non-volatile memory, can be shared with the other file operation management devices 1, to allow a faster fail-over and link between them. In this respect, the consistency of the file systems even in the presence of a sudden power failure is an important property and there are several methods to guarantee it. By using a non-volatile memory as the memory unit 6 for temporarily storing data such that the write operations to the storage device 11 are free in sequence, a sudden power failure can be overcome. In addition, the memory unit 6 can comprise a volatile memory space for data caching of the file system instead of doing so in the main memory 13, because any access to the main memory 13 will slow down any other accesses to the same main memory 13, including those for application-processing.

As a further interface, an authentication interface can be provided such as a smartcard interface, not shown in the figure. This provides security to the system 19, for which the installation of additional functions, the configuration, or the retrieval of monitoring results should not be permitted all the time by the host system, i.e. the processing memory unit 14. For carrying out administrative work, the administrator connects a secure data carrier, such as a smartcard to the authentication interface. This invokes a mechanism to install a new plug-in or the retrieval of information. By making use of the secure data carrier, this method also allows the retrieved information to be in encrypted form such that the administrative work can be carried out by an operator with lower privileges who will not see the content of the unencrypted information.

Moreover, in order to execute the data protocol for communication via the interfaces, a protocol state machine such as SCSI, FibreChannel, StorageTank etc. can be provided.

Another function of the file system is maintaining the integrity of the files by avoiding concurrent, uncoordinated access thereto. This function is here performed by the token/lock management unit 8. Every file access of an application is observed by the token/lock management unit 8 and in the event of concurrent accesses to the same file or data section of a file the compatibility of the access types is checked and in case of a conflict the second access is delayed or denied. This integrity maintenance function has several aspects. A first aspect is maintaining the integrity between processes running on the same system 19. As a second aspect, however, the same functionality of the token/lock management unit 8 can also be used to ensure consistency in case of accesses to common files between different CPUs 12. The lock management functionality for files can use hardware acceleration included in the file operation management device 1 such as a content-addressable memory or tree search/insert engines. The token/lock management unit 8 can also be inserted into the path between the data interface 3 and the file system unit 2, thereby providing a reduction of the utilization of the file system unit 2 by those file accesses that are denied by the token/lock management unit 8 in case of access conflict.

Furthermore, the file operation management device 1 handles the scheduling of the access sequence of the file systems handled to the storage devices 11. This can be performed by the access scheduling unit 20 that maintains a data structure in which the pending data-block-read or data-block-write requests are stored and a second data structure also stores the states of the connected storage devices 11. The access scheduling unit 20 therefrom determines a priority which of the pending requests is to be executed next. A preferred priority scheme would be to select those requests that are physically, i.e. with regard to the storage location on the storage device 11, closest to the storage location addressed by the last access, thereby increasing the performance of the file operation management device 1 by reducing the head movements of the storage device 11. Another preferred priority scheme favors the longest-pending request over others, thereby guaranteeing equal performance for the pending applications. Another priority scheme would be to group together requests that apply to physically close or identical data blocks.

## Claims

1. File operation management device (1) for performing file system operations, comprising:
- a storage interface (4) for coupling to a data storage device (11);
- a data interface (3) for coupling to an application-processing unit (14) to receive user and/or command data from the application-processing unit (14) and to transmit status data and user data to the application-processing unit (14);
said data interface (3) being connectable to the application-processing unit (14) within a system (19) that is closed against access by an untrusted device,
- a file system unit (2) for receiving the user and/or command data via the data interface (3) and for performing a file system operation on the data storage device (11) depending on the user and/or command data received via the data interface (3).

2. File operation management device (1) according to claim 1, wherein the file system (2) unit is designed to receive command data indicating the file system operation as one of creating, opening, reading, writing a file.

3. File operation management device (1) according to claim 2, wherein the file system unit (2) is designed to perform at least one the following:
- check a checksum,
- generate the checksum,
- perform a background copy for backup or data migration services,
- monitoring fily system parameters, preferably for performance tuning, billing and maintenance.

4. File operation management device (1) according to one of claims 1 to 3, further comprising a memory interface (7) for coupling to a memory unit (6) to store thereon status information of the file system unit (2).

5. File operation management device (1) according to claim 4, being couplable to the memory unit (6) comprising a non-volatile memory.

6. File operation management device (1) according to one of claims 1 to 5, further comprising a cache memory unit (9) to cache user data.

7. File operation management device (1) according to one of claims 1 to 6, further comprising a token/lock management unit (8) to maintain the integrity of files stored in the coupled storage device (11) by managing accesses to the files.

8. File operation management device (1) according to one of claims 1 to 7, further comprising a fail-over interface (5) to provide a fail-over functionality wherein in the event of a.failure in the file system unit (2) the performing of the file system operations is handed over to a file-operation-handling-instance by means of the fail-over interface (5).

9. File operation management device (1) according to claim 8, wherein the fail-over interface (5) is designed to hand over file operations to the application-processing unit (14) as the file-operations-handling-instance.

10. File operation management device (1) according to claim 8 or 9, wherein the fail-over interface (5) is designed to hand over file operations to a second file system unit which is coupled to the application-processing unit (14).

11. File operation management device (1) according to one of claims 8 to 10, wherein the file system unit (2) shares the performing of the file system operation with the a file-operation-handling-instance coupled to the fail-over interface (5).

12. File operation management device (1) according to claim 10 or 11, wherein the file system unit (2) is designed to take over performing of the file system operation of the coupled a file-operation-handling-instance when an indication about a failure of the coupled a file-operation-handling-instance is received via the fail-over interface (5).

13. File operation management device (1) according to one of claims 1 to 12, further comprising an adapter unit for the storage device (11).

14. Processing system (19) including a file operation management device (1) according to one of the claims 1 to 13, wherein the file operation management device (1) is connected to one or more application-processing units (14).

15. Processing system (19) according to claim 14, wherein the one or more application-processing units (14) are coupled to the file operation management device (1) via at least one of a processor bus, an PCI bus, an PCI-X bus, an PCI-Express bus, a SCSI bus, a microchannel bus, Frontside bus (FSB), Hypertransport bus, a S-ATA bus, a Rapid-I/O bus and a FireWire bus.

16. Method for managing a file system for an entity, comprising:
- receiving at a file system unit (2) via a data interface (3) user and/or command data from an application-processing unit (14) operated by the entity, said data interface (3) being connected to the application-processing unit (14) within a system (19) that is closed against access by an untrusted device,
- via said data interface (3) transmitting status data and user data to the application-processing unit (14);
- performing by means of said file system unit (2) that is coupled to a data storage device (11) via a storage interface (4) a file system operation on the data storage device (11) depending on the user and/or command data received via the data interface (3).

17. Method according to claim 16,further comprising
- a step of monitoring one or more system parameters,
- a step of billing the entity for the use of the application-processing unit (14) based on the result of the monitoring step.
